# EUROPEAN PATENT APPLICATION

(11) **EP 1 443 208 A1**
(43) Date of publication of application: **04.08.2004**
(21) Application number: 03002057.2
(22) Date of filing: 29.01.2003
(51) Int. Cl.: F03D 1/00, E02D 1/08

(54) **Wind turbine protection apparatus and method of operation thereof**

(71) Applicant: GENERAL ELECTRIC COMPANY, Schenectady, NY 12345 (US)
(72) Inventor: Poetschke, Timo, 48417 Münster (DE); Schulz, Johannes, 48527 Nordhorn (DE)
(74) Representative: Zimmermann & Partner

(57) **Abstract**

The present invention describes a wind turbine stabilization apparatus and a method of operation thereof. The apparatus comprises a sensor unit with at least a first sensor 16 for measuring a ground water level. The signal of the sensor or the sensor unit respectively is transmitted to a control unit 4 of the wind turbine. In the case of a ground water level critical to the statics of the wind turbine, a switch-off signal is generated.

## Description

### FIELD OF THE INVENTION

The invention relates to wind turbines. In particular, it relates to the statics of wind turbines. Specifically, the present invention relates to a wind turbine protection apparatus, a method of operation thereof and a wind turbine.

### BACKGROUND OF THE INVENTION

Wind power has many advantages over traditional fuels. Its environmental benefits, the security of supply, i.e. there are no embargo and export control issues and wind is available to all, and its abundance are just a few. In some states wind is the fastest growing energy source for electricity production. Thereby, wind turbines providing several megawatts and reacting flexibly on different conditions have been realized.

Additionally, safety and support concepts have been developed. One of the safety aspects to be considered refers to the foundation of a wind turbine on which the tower is mounted. The size of foundation has to be determined in view of the size of the wind turbine and by the local geological conditions. Thereby, the loads acting on the wind turbine during extreme winds have to be taken into account. The load can partly be reduced by e.g. pitch regulated rotor blades or the like. Nevertheless, forces of over 2000 kN acting downward, forces of over 500 kN acting in the wind direction and forces of over 150 kN acting sideward, meaning forces acting at some angle relative to the wind direction as would happen with a gust of wind from the side, have to be considered as acting at the foot of the tower. Thus, strong foundations have to be used for the sound standing of the wind turbine.

However, as mentioned above, the stability of the foundation also depends on the local geological conditions. Thereby, ground water and especially rising ground water is an aspect to be taken into account, especially since many wind farms are built close to the coast in view of the good wind conditions available.

Therefore, according to the state of the art, pump systems to keep the ground water below a certain level are suggested. However, it is difficult to decide which pump delivery rate is necessary. In order to be on the safe side, usually oversized pump systems are used, which have a high power input. Since a rising ground water level can result in serious damage, additional backup systems have to be provided.

According to a different known solution, largely oversized foundations with additional gravitational forces are used. Such a concept requires extensive effort during construction and therefore the cost of the foundation is increased.

A further known solution teaches the usage of piles, whereon the foundation is built. Again, such a concept increases the cost of a foundation.

### SUMMARY OF THE INVENTION

The present invention intends to overcome at least some of the above problems. Thereby, a wind turbine having improved safety measures concerning ground water level is provided. This is intended to be solved by the wind turbine protection apparatus according to independent claim 1, wind turbine according to independent claim 12 and the method of operating a wind turbine protection system according to independent claim 24.

Further advantages, features, aspects and details of the invention can be seen from the dependent claims, the description and the drawings.

According to one aspect a wind turbine stabilization system, also referred to as the protection apparatus, is provided. The apparatus comprises a sensor unit with a sensor responsive to a ground water level. A signal of the sensor is provided to the wind turbine by a transmitting unit.

Thus, depending on the signal corresponding to the ground water level, which is transmitted from the sensor unit, the state of operation of the wind turbine can be controlled. In the case, where the statics of the wind turbine is critical in view of the ground water level, the wind turbine can be protected by the protection apparatus by switching off the wind turbine.

According to another aspect, a second sensor is provided for the sensor unit. Optionally, the second sensor can be provided at a different depth as compared to the depth of the first sensor.

In view of this aspect, the measurement reliability can be increased and/or back-up sensors can be provided. In case of the optional positioning at different depths, ground water level variations or ground water warning levels can be detected.

According to another aspect, the sensor of the sensor unit is provided within a chamber, the chamber having a lining. Thus, a separated area is provided for the sensor. Thereby, the sensor is protected and malfunctioning can be reduced. According to a further aspect, the chamber can be connected to a drainage system. Thereby, the ground water level of the area of the drainage system is provided to the chamber.

According to further aspects, the sensors responsive to the ground water level can either be sensors to detect ground water at the sensor position, sensors measuring a continuous ground water level value or sensor measuring the humidity of the soil and thereby a continuous ground water level value. According to a further aspect, combinations of these sensors can also be provided. Thus, measuring systems with varying flexibility can be provided, which can be adapted to the local conditions of a wind turbine.

According to a further aspect, measuring of a continuous ground water level value can be used calculating the potential danger potential with a CPU or the like. Thus, different states of operation, like warning, switch off, or operation at light winds can be realized depending on the evaluation of the CPU.

According to a further aspect a wind turbine comprising a foundation, a tower, a nacelle, rotor blades and any wind turbine protection apparatus can be used according to one of the above mentioned aspects.

According to a further aspect, a method of operating a wind turbine protection apparatus is provided. Thereby, a signal of a sensor is measured. The sensor responds to the ground water level at the foundation of the wind turbine. Further the state of operation of the wind turbine is changed, depending on the measured sensor signal.

According to a further aspect, the change of operation of the wind turbine is to switch the wind turbine off or on, depending in the measured sensor signal.

According to a further aspect, the signal of at least a further sensor responsive to the ground water level is measured. Based on the measured signals of the sensors, the wind turbine is either switched in a warning state, an off state or can be run under normal operation. Optionally, the wind condition can be further evaluated to decided on the state of operation of the wind turbine. Thus, a switch off, which would be unnecessary under light wind conditions, can be avoided.

The invention is also directed to apparatuses for carrying out the disclosed methods, including apparatus parts for performing each described method step. These method steps may be performed by way of hardware components, a computer programmed by appropriate software, by any combination of the two or in any other manner. Furthermore, the invention is also directed to methods by which the described apparatus operates. It includes method steps for carrying out every function of the apparatus.

### BRIEF DESCRIPTION OF THE DRAWINGS

Some of the above indicated and other more detailed aspects of the invention will be described in the following description and partially illustrated with reference to the figures. As used herein, like numerals throughout the various figures represent the same or equivalent features of the present invention. Therein:
- Fig.1: shows a schematic side view of one embodiment, whereby the stabilization system and parts of the wind turbine are shown;
- Fig. 2: shows a schematic side view of a further embodiment, whereby two sensors are used for measuring the ground water level;
- Fig. 3: shows a schematic side view of a further embodiment, whereby a measuring device for continuous measuring of the ground water level are used;
- Fig. 4: shows a schematic side view of a further embodiment, whereby the measuring device in the form of humidity sensors are applied for continuous measuring of the ground water level; and
- Fig. 5: shows a schematic side view of a wind turbine with a foundation, a tower, a nacelle, rotor blades and a stabilization system connected to a control unit.

### DETAILED DESCRIPTION OF THE DRAWINGS

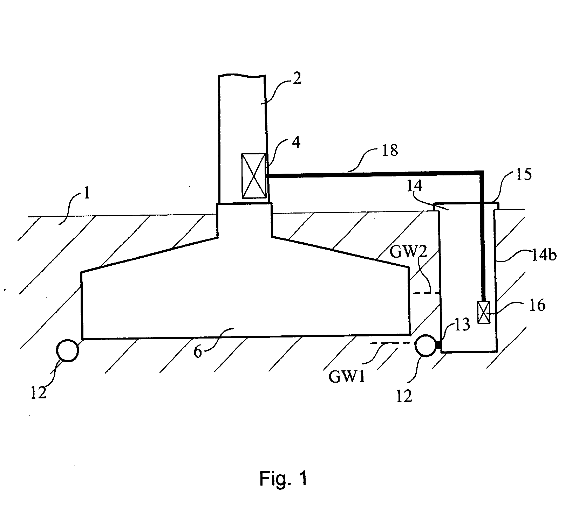

One embodiment is shown in Fig. 1. The stabilization system described below is located in the vicinity of the wind turbine. In Fig. 1, the foundation 6 of the wind turbine is located in soil 1. The foundation 6 must be large enough to resist the forces acting on the wind turbine during operation and/or high load wind conditions when the turbine is switched off. The foundation should at least be dimensioned to receive these forces as long as the ground water level is below a defined depth. Thereby, maximum wind conditions and wind turbine features like pitch control and the average local geological conditions have to be taken into account. The tower 2 of the wind turbine (only bottom part shown in Fig.1) is connected to the foundation. In general, different kinds of materials and different kinds of shapes and mounting systems can be used for the tower. Generally, steel towers, concrete towers, lattice towers or the like can be used. Depending on the tower used, the tower is connected to the foundation by casting the tower in the foundation, by a foot flange connection or the like.

Within tower 2, a control unit 4 of the wind turbine is located. The control unit is accessible by walking into the tower. Since the tower provides a hub height of over 80 m, it is apparent that it has a diameter of at least several meters and is thus accessible. The control unit is one of the wind turbine components that is relatively easily accessible, since an operator does not need to climb the tower to have access to the control unit. As a consequence, the control unit provides several control mechanisms of the wind turbine, which can also be used by the wind turbine stabilization system as described in the following.

It is within the scope of the present invention that a control unit could also be located outside the wind turbine tower or at another location. Thereby, generally, the ease of accessibility and access authorization control are issues to be considered.

The wind turbine stabilization system according to one embodiment comprises a sensor 16 located in chamber 14. Depending on the ground water level, for example GW1 or GW2, respectively, sensor 16 may or may not be exposed to ground water. Thus, when the ground water level is above a certain limit, the sensor is exposed to the ground water. In the case where the ground water level exceeds this limit, sensor 16 provides a signal indicative of the dangerous ground water level. This signal is transmitted via transmitting unit 18 to control unit 4 of the wind turbine. Then, control unit 4 causes the wind turbine to switch into an off state or mode. By switching off the wind turbine, the forces acting on the foundation are significantly reduced. Thus, the wind turbine is stabilized by the protection apparatus.

By varying the depth of sensor 16 within chamber 14, the ground water level limit, which causes ground water to switch off the wind turbine, can be adjusted.

In the embodiment of Fig. 1, sensor 16 is located in chamber 14. Chamber 14 is located in the soil adjacent to the foundation. Chamber 14 is connected to a drainage system 12 via duct 13. Thereby, the ground water level existent in soil 1 adjacent to foundation 6 and drainage system 12 is transferred to chamber 14. In order not to have rainwater flowing into chamber 14, a cover is provided on top of chamber 14. Thus, the cover on top of chamber 14 acts as a rainwater protector 15 for sensor 16. A cover as shown in Fig. 1 is only one of several possibilities to protect a sensor 16 from water other than ground water.

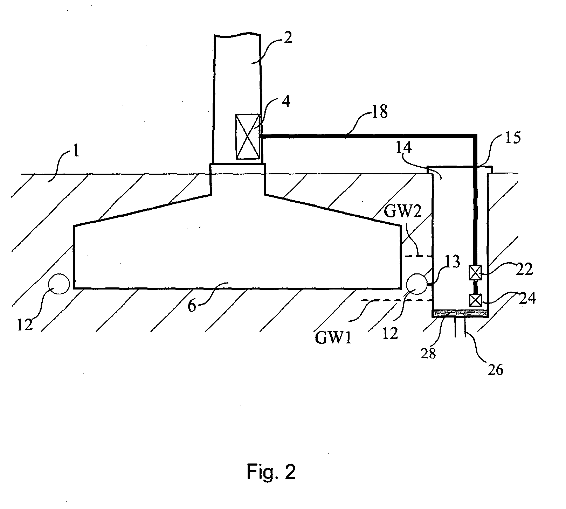

The drainage system shown in Fig. 1 is a drainage ring provided around foundation 6. The present invention is not limited thereto. A drainage system could be arranged in several rings or other arrangements, and some of the drainage arrangements might be located at different depths with respect to each other. Further, grooves on the outer surface of the foundation could be used to assist a drainage, like a drainage ring. The different embodiments of a drainage system, as described above, can also be applied to other stabilization system embodiments, which are described with respect to Figs. 2 to 5.

Within Fig. 1, chamber 14 is schematically drawn with a lining 14b. This lining can be waterproof, such that ground water flowing into chamber 14 via duct 13 is collected and stays in the chamber. According to such an embodiment, the only connection of chamber 14 to soil 1 and the ground water level (GW1, GW2) is via drainage 12 and duct 13. Thus, ground water in chamber 14 has to flow in and out via duct 13 and drainage 14. Therefore, within an embodiment, wherein duct 13 is the only inlet and outlet, duct 13 is preferably connected to the chamber close to the bottom. Thereby, if the ground water level has dropped to a low level, water retention in the chamber 14 can be avoided.

However, chamber 14 can also be realized according to different embodiments, which will be described in the following. It is also possible to simply dig a hole in the soil, the hole being deep enough to have the sensor placed at a ground water limit that is crucial for the stability of the wind turbine (safety margins taken into account). The hole can optionally be connected to a drainage system. Further, it can be filled with e.g. silicic or the like to avoid loose soil at the edge of the hole (chamber) falling into the chamber. In such an embodiment the sensor might also be considered as being buried in soil 1 adjacent to foundation 6. To allow access to the sensor for maintenance, the filling material is provided in a form so that it can be removed easily.

Further, another configuration of chamber 14 includes a chamber with a chamber wall, e.g. lining 14b, is positioned in a hole. As shown in Fig. 1, the chamber can be connected to a drainage system via duct 13. However, as not shown in Fig. 1, it is further possible that the bottom of the chamber has a hole such that water flowing into chamber can escape chamber 14, as soon as the ground water level declines.

In one configuration, tubes made of concrete are used as lining. At the upper end, a concrete cover closes the tube which forms the chamber. to build the tube shaped chamber, it is possible to use several concrete rings which are put on top of each other. A filter which is described in more detail with respect to Fig. 2 is placed at the lower end of the tube shaped chamber. The concrete walls include a hole through which the chamber is connected to the drainage system via duct 13.

Turning to the sensor the stabilization system according to the present invention, sensor 16 measures whether or not the ground water level has exceeded a certain limit. If so, the signal transmitted to control unit 4 by sensor 16 causes control unit 4 to switch off the wind turbine. Thereby, the forces acting on the foundation are significantly reduced. A ground water measurement system could incorporate several sensors 16 to, for instance, improve measurement reliability. Thereby, the sensors can be used as back-up systems. Additionally or alternatively, the wind turbine could only react on a critical ground water level in the case where at least 20% of provided sensors, at least 50 % of provided sensors, or at least 80 % of the provided sensors give a ground water level limit exceed signal. The above-described variations including several sensors 16 can optionally also be applied to other embodiments described with respect to the additional Figs..

Within Fig. 2, a further embodiment is shown. In the following, Fig. 2 will be described with reference to Fig. 1. Thus, only differences as compared to Fig. 1 will be described. Fig. 2 shows a stabilizing system, wherein two sensors 22 and 24 are used. Sensors 22 and 24 are located in chamber 14. Chamber 14 is connected to the surrounding ground water on the one hand via drainage system 12 and duct 13. On the other hand, chamber 14 is connected to the surrounding ground water via opening 26. Opening 26 connects chamber 14 to the surrounding ground water via filter 28. Filter 28 is built such that water can flow into chamber 14 and out of the chamber. However, filter 28 keeps mud, sand and other particles from entering chamber 14. Thus, mud, sand and other particles do not become deposited in the chamber. Consequently, cleaning of the chamber of deposits can be avoided or cleaning frequency can be reduced.

According to a different embodiment, also duct 13 can be provided with an appropriate filter (not shown). Further, it is possible to provide several inlets and outlets in and from chamber 14, which might be comparable to either opening 26 or duct 13.

The operation of the system shown in Fig. 2, comprising sensor 22 and 24, will now be described. In the case where the ground water level is below the position of sensor 24, neither of the two sensors detects ground water. During rising ground water, first sensor 24 will recognize the rising ground water level. Thus, a signal transmitted by sensor 24 indicates that the ground water level has risen to a level indicated by GW1. Depending on the statics of the wind turbine, ground water level might be low enough to further run the wind turbine in the case of light winds. Thus, a ground water detection signal of sensor 24 can be considered as a ground water level warning. In the case where heavy winds act on the wind turbine, even the warning status would result in switching off the wind turbine. In the case of light wind the wind turbine can remain in normal operation. Further, it is possible to provide a warning signal to a remote maintenance system. Such a remote maintenance system could either be located in a central control building of the wind turbine owner or could be located in a maintenance department of the manufacturer.

In the case of a further rising ground water level, sensor 24 as well as sensor 22 would provide a signal corresponding to detected ground water. Depending on the sensitivity of sensor 22 and the depth of sensor 22, a certain ground water limit results in a transmittance of both sensors of a signal corresponding to ground water detection. Thus, the wind turbine can be switched off, if ground water reaches a certain level.

Within the embodiment shown in Fig. 2, it is further possible to use sensor 22 and sensor 24 for a reliability test of the system. In the case where sensor 22 transmits a signal corresponding to detected ground water and sensor 24 does not, the system could transmit a further signal indicating a malfunction. In such a case, the wind turbine might immediately be switched off, a warning to a remote maintenance system might be generated and/or ground water measurement data of adjacent wind turbines (in case the wind turbine is a part of a wind farm) could be received for deciding on any further action.

In a further configuration, sensor 24 is connected to a pump which starts operation as soon as the ground water has reached a first level. Should the pumping of the water not be sufficient to prevent the ground water to reach a predetermined second level then sensor 22 causes the wind turbine to be switched off.

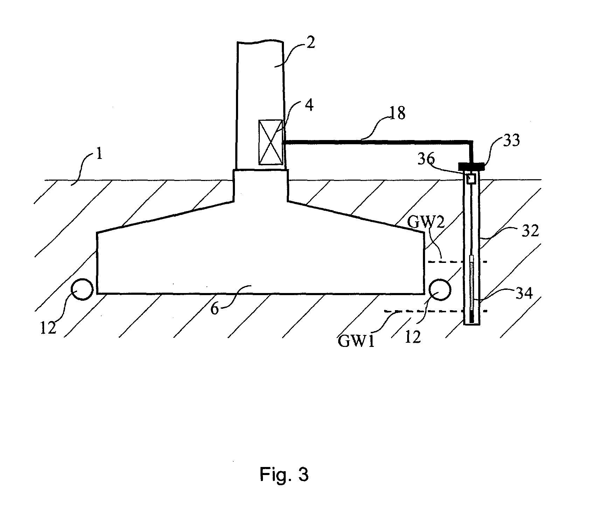

Within Fig. 3, a further embodiment is shown. In the following, Fig. 3 will be described with reference to Fig. 1. Thus, only differences as compared to Fig. 1 will be described. Fig. 3 shows a stabilizing system, wherein a measurement system in the shape of a tube is inserted in the soil close to the foundation. The measurement system is connected to control unit 4.

The measurement system has a tube 32 forming a chamber for sensor 34. Within the measurement system, an evaluation unit 36 in the form of an electrical circuit, microcomputer, CPU or the like is provided. A cap 33 covers tube 32. Cap 33 protects sensor 34 and the interior of tube 32 including evaluation unit 36 from rainwater or the like.

Sensor 34, as indicated by the elongated vertical measurement cell, is capable of measuring variances in the ground water level continuously or quasi-continuously. Quasi-continuously is to be understood as measuring variance of the ground water level with an increment given by the sensitivity of the sensor or by a digitalisation process. Thus, sensor 34 does not decide whether or not the ground water level has reached the sensor position, but provides a signal corresponding to the depth of the ground water level. Sensor 34 might be able to output an analogous value between 0V and 5V or an analogous value between 0V or 10V, a digital value of any kind of bus-connection (CAN, PROFI, etc) or any other value indicative of the level of the ground water.

Evaluation unit 36 can read the ground water level depth output value of sensor 34. Thus, evaluation unit 36 can provide an external device with a defined value of the ground water level. In this case, the external device would decide on any response (switch off, warning or the like) to be taken in view of the ground water level. On the other hand, evaluation unit 36 might also be capable of evaluating the measured sensor value, decide whether or not the wind turbine should be switched off and transmit a respective signal via transmitting unit 18 to the wind turbine.

Within Fig. 3, the measuring system is not connected to drainage system 13. Tube 32 is structured such that water could enter or leave the chamber formed by tube 32. Thereby, a filter as described with respect to Fig. 2 can be used to cover the openings in tube 32. Thus, mud, sand or the like cannot get into tube 32. Thereby, deposition of mud, sand and the like within tube 32 is reduced.

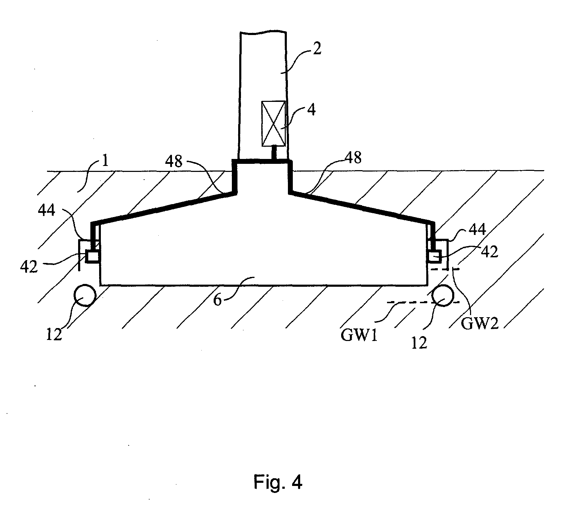

Fig. 4 shows a further embodiment of a wind turbine stabilization system. Similarly or comparably to the above described embodiments, tower 2 of the wind turbine is mounted to foundation 6, provided in the soil 1. Further, a drainage system 12 is provided around foundation 6. Within tower 2 a control unit 4 is located.

Fig. 4 shows an embodiment wherein the ground water level measurement system comprises sensors 42. Sensors 42 are connected to control unit 4 of the wind turbine via transmitting units 48. Sensors 42 are capable of measuring the humidity of the soil adjacent to the sensor. Thus, a rising ground water level, whereby the humidity of the soil at a certain level would continuously increase, could be detected by measuring the soil humidity. Thus, a continuous measurement result of the ground water level could be realized.

Optionally, sensor 42 is partly surrounded by a rainwater protection mechanism 44. A cover shields sensor 42 from the top and from the side exposed to the soil. Thus, water flowing towards sensor 42, which is not caused by a rising ground water level, does not affect or hardly affects the humidity measurement of sensor 42.

Within Fig. 4, two sensors and rainwater protectors 44 and transmitting units 48 are provided. As described with respect to the embodiment of Fig.1, one of the two sensors can be used as a back-up sensor for the other one, or the two measurements can be combined to improve the reliability of the result. Of course, it will be understood by one of ordinary skill in the art that one sensor could work with this embodiment, as well as multiple sensors.

Comparable to sensor 34 (see Fig. 3), sensor 42 outputs a measurement value, which is not a binary (yes/no) result, but which gives a continuous or quasi-continuous value. Thus, an evaluation unit, located within control unit 4 or within the measurement sensors, is used to decide, based on the humidity value, if the wind turbine should be switched off, if a ground water level warning should be generated or if the wind turbine can run under normal conditions.

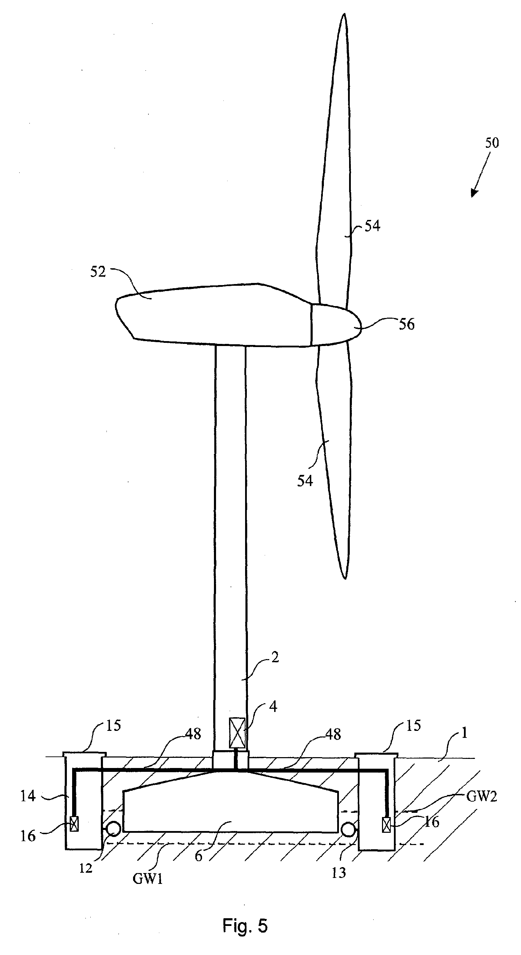

A further embodiment will now be described with respect to Fig. 5. Therein, a wind turbine 50 with nacelle 52, rotor blades 54, hub 56, tower 2 and foundation 6 is shown. Adjacent to foundation 6 there is drainage system 12. Drainage system 12 is connected via ducts 13 to respective measurement chambers 14. Within each chamber, a sensor 16 is located. Sensors 16 measure if the ground water level has exceeded a certain limit. A respective signal is provided via transmitting units 48 to the control unit 4 of the wind turbine.

The sensor signals may be provided directly or via an evaluation unit, for instance, with electric cables (18, 48) to a control unit. Thereby, the cables are considered as a transmitting unit. Instead of cables, also remote transmitting of surrounding sensors can be used to provide a control unit with the desired signals. It is within the scope of the invention that different options can be used for transmitting sensor signals corresponding to the ground water level to a control unit. Thus, different types of transmitting units are well within the scope of the present invention.

If the ground water level exceeds a defined limit, which is based on the statics, the wind turbine 50 is switched off. Thereby, rotor blades 54 are pitched in a park position. Further measures to bring the wind turbine in an off state can be taken.

As described with respect to the previous embodiments, it is also possible to measure the ground water level with a continuous value or with a series of sensors each giving a binary (yes/no) signal based on their ground water contact. Thus, based on the information provided by a measurement system, a stabilization system can decide on different measures to be taken, including providing a warning to a remote maintenance system, and switched the wind turbine off or on depending on conditions detected.

The terms and expressions which have been employed herein are used as terms of description and not of limitation, and there is no intention, in the use of such terms and expressions, of excluding any equivalents of the features shown and described or portions thereof. Having thus described the invention in detail, it should be apparent that various modifications can be made in the present invention without departing from the spirit and scope of the following claims

## Claims

1. Wind turbine protection apparatus, comprising
a sensor unit with at least a first sensor (16; 22; 34) responsive to a ground water level at the foundation of the wind turbine;
at least one signal transmitting unit (18; 48), providing a signal from the sensor unit to a control unit of the wind turbine.

2. Apparatus according to claim 1, whereby the sensor unit comprises at least a second sensor.

3. Apparatus according to claim 2, whereby the second sensor is located at a different depth as compared to the depth of the first sensor.

4. Apparatus according to any of the preceding claims, whereby the at least first sensor is located in a measurement chamber (14; 32).

5. Apparatus according to claim 4, whereby the measurement chamber is connected to a drainage system.

6. Apparatus according to any of the preceding claims, whereby the at least first sensor is a ground water detection sensor, detecting if the ground water level has reached the position of the first sensor.

7. Apparatus according to any of the preceding claims, whereby one of the at least first and the at least second sensors is a ground water level sensor (34) measuring a continuous change of the ground water level.

8. Apparatus according to any of the preceding claims, whereby one of the at least first and the at least second sensors is a humidity sensor (42) measuring a continuous change of the earth humidity introduced by the ground water level.

9. Apparatus according to any of the preceding claims, whereby the sensor unit is a continuous ground water level measurement system.

10. Apparatus according to claim 9, whereby the at least one sensor of the continuous ground water measurement system provides a signal to a CPU, the CPU being capable of transmitting at least two different response signals to the control unit of the wind turbine.

11. Apparatus according to any of the preceding claims, further comprising a rain water protector (15; 45), whereby the at least first sensor is protected from rain water.

12. Wind turbine, comprising
a foundation (6) for providing stability to the wind turbine;
a tower (2) mounted on the foundation;
a nacelle (52) mounted on the tower;
at least one rotor blades (54); and
a wind turbine protection apparatus, comprising
a sensor unit with at least a first sensor (16; 22; 34) responsive to a ground water level at the foundation of the wind turbine;
at least one signal transmitting unit (18; 48), providing a signal from the sensor unit to a control unit of the wind turbine.

13. Wind turbine according to claim 12, whereby the sensor unit comprises at least a second sensor.

14. Wind turbine according to claim 13, whereby the second sensor is located at a different depth as compared to the depth of the first sensor.

15. Wind turbine according to any of claims 12 to 14, whereby the at least first sensor is located in a measurement chamber (14; 32).

16. Wind turbine according to claim 15, whereby the measurement chamber is connected to a drainage system.

17. Wind turbine according to any of claims 12 to 16, whereby the at least first sensor is a ground water detection sensor, detecting if the ground water level has reached the position of the first sensor.

18. Wind turbine according to any of claims 12 to 17, whereby one of the at least first and the at least second sensor is a ground water level sensor measuring a continuous change of the ground water level.

19. Wind turbine according to any of claims 12 to 18, whereby one of the at least first and the at least second sensor is a humidity sensor measuring a continuous change of the earth humidity introduced by the ground water level.

20. Wind turbine according to any of claims 12 to 19, whereby the sensor unit is a continuous ground water level measurement system.

21. Wind turbine according to claim 20, whereby the at least one sensor of the continuous ground water measurement system provides a signal to a CPU, the CPU is capable of transmitting at least two different response signals the control unit of the wind turbine.

22. Wind turbine according to any of claims 12 to 21, further comprising a rain water protector (15; 45), whereby the at least first sensor is protected from rain water.

23. Wind turbine according to any of claims 12 to 22, further comprising
a drainage system located in the vicinity of the foundation, whereby the drainage system is connected to the wind turbine stabilization system.

24. Method of operating a wind turbine protection apparatus, comprising the steps:
monitoring a sensor signal of a first sensor responsive to the ground water level at the foundation of the wind turbine; and
changing the state of operation of the wind turbine depending on the first sensor signal.

25. Method according to claim 24, comprising the steps:
switching the wind turbine in an off-state depending on the first sensor signal.

26. Method according to any of claims 24 to 25, comprising the steps
detecting a sensor signal of a second sensor responsive to the ground water level; and
switching the wind turbine in a warning state depending on the second sensor signal;

27. Method according to any of claims 24 to 26, further comprising the steps
detecting the wind conditions acting on the wind turbine, whereby the switching of the wind turbine in an off-state depends on one of the first and second sensor signals and the wind conditions acting on the wind turbine.

28. The wind turbine protection apparatus according to claim 2 and the wind turbine according to claim 13, whereby the second sensor is connected to a pump.
